# EUROPEAN PATENT APPLICATION

(11) **EP 3 382 706 A1**
(43) Date of publication of application: **03.10.2018**
(21) Application number: 17163254.0
(22) Date of filing: 28.03.2017
(51) Int. Cl.: G11B 27/00, G11B 20/10, H04N 5/783

(54) **SYSTEM AND METHOD FOR AUDIO/VIDEO TRICK MODES**

(71) Applicant: Advanced Digital Broadcast S.A., 1262 Eysins (CH)
(72) Inventor: Dobryniewski, Jacek, 65-119 Zielona Gora (PL)
(74) Representative: Blonski, Pawel

(57) **Abstract**

A method for audio/video trick modes comprising: receiving an audio/video data stream; receiving a request for a trick mode playback (101) at a given speed greater than 1; playing back the video content according to the trick mode speed (106); the method being characterized in that it further comprises the step of: playing back sequential audio clips at a speed lower (107) than the trick mode speed; wherein subsequent starting points of audio clips are in proximity in time to a then - played video section.

## Description

### TECHNICAL FIELD

The present invention relates to a system and method for audio/video trick modes. In particular the present invention relates to fast forward and reverse playback trick modes at accelerated rates typically exceeding 2 times the normal playback speed.

### BACKGROUND OF THE INVENTION

There are numerous audio/video products offering their users the possibility of playing back audio/video content. Such products comprise video recorders, TV sets, DVD players, Set-Top Boxes, personal computers, notebooks and plurality of hand-held devices commonly referred to as palmtops, tablets, smartphones, e-books. Majority of them, offer the possibility of playing back audio/video content available either in the devices' internal memories, external data discs, network attached storage systems or, in a wider sense, in the Internet where the desired audio/video content is streamed at user's request.

Prior art defines trick modes, sometimes called trick play, that are a feature of digital video systems that mimic the visual feedback given during fast-forward and rewind operations that were provided by analogue systems such as VCRs.

Sometimes the rate of trick modes reaches 64x or 128x normal playback mode. In such cases only video is shown while audio is muted.

A publication of US 20080131075 A1, entitled "Trick play dvr with audio pitch correction" discloses systems for providing substantially correct pitch audio associated with video played back at a rate other than originally recorded. A system in accordance with this invention comprises a record/playback device, wherein the record/playback device records audio programming and associated video programming at a normal speed and plays back the recorded audio programming and associated video programming at a range of speeds, a computer, coupled to the record/playback device, for determining the playback speed of the record/playback device, and an audio controller, coupled to the computer, for amending the audio programming to match a playback speed of the associated video programming while substantially maintaining the pitch of the audio programming.

Such systems are applicable only to fast forward, low playback speed modifiers such as 1.2x or 1.5x, because further increase of speed makes the audio difficult to understand and unpleasant to follow.

According to '075: "Further, it is desirable to allow for the option of turning pitch correction on and off. So, for example, a DVR **112** device might employ no TSM correction at speeds of 1 to 1.2x, employ TSM correction at speeds from 1.2-4x, and because computational speed limitations prevent the TSM algorithm from being applied above 4x, mute the audio at speeds above 4x".

Thus, such systems are not applicable to fast forward speeds of more than 4x and any speeds in fast rewind modes.

A publication of US 5583652 A, entitled "Synchronized, variable-speed playback of digitally recorded audio and video" discloses a method and system for providing user-controlled, continuous, synchronized variable-speed playback of a previously recorded digital audio/video presentation. The user directly controls the rate of playback and the audio and video remain synchronized. The audio is expanded or compressed using the time domain harmonic scaling method so that the pitch of the audio remains undistorted. The user is permitted to set a value for the scaling factor RV from 0.333 to 2.9.

Thus, similarly as the previous solution, such systems are not applicable to speeds of more than or equal to 4x.

Due to the above, a user of such trick modes above 4x speed in limited only to video cues in order to select a place of normal playback at 1.0 speed. What would be advantageous is to include also audio cues at speeds exceeding 4x while allowing for easy determination of a normal speed synchronized playback start point in fast forward (FF) / fast rewind (FR) modes of audio video devices.

The aim of the development of the present invention is an improved and effective method and apparatus for providing optional, meaningful, human auditory sensor related, navigation in fast rewind or fast forward trick modes where the scrolling backward direction and speed or high fast forward speeds prevent human perceptive abilities from proper understanding of the audio content.

Providing audio cues at high FF or FR speeds additionally facilitates the change from FF or FR mode to normal speed playback mode because the user/viewer has more time to select normal speed playback command which, in the case of only visual cues, is limited to quickly flashing video frames and in the case of audio cues is limited to the length/duration of the played back audio clips.

### SUMMARY AND OBJECTS OF THE PRESENT INVENTION

An object of the present invention is a method for audio/video trick modes comprising: receiving an audio/video data stream; receiving a request for a trick mode playback at a given speed greater than 1; playing back the video content according to the trick mode speed; the method being characterized in that it further comprises the step of: playing back sequential audio clips at a speed lower than the trick mode speed; wherein subsequent starting points of audio clips are in proximity in time to a then - played video section.

Preferably, the audio playback speed is in a range from 1x to 2x while the video playback speed is in a range of 4x to 128x.

Preferably, said playback comprises the step of: determining a next video frame (F1) to be shown, the video frame having assigned a presentation time of (T1); determining a subsequent video frame (F2) to be shown after said next video frame (F1) having assigned a presentation time of (T2); selecting a (T3) time for audio playback start in proximity in time to a currently played video frame; determining an audio clip duration.

Preferably, the determining an audio clip duration assumes a predefined duration.

Advantageously, the determining an audio clip is selected in dependence on the current trick mode speed wherein the faster the playback speed the shorter the audio clip.

Preferably, the determining an audio clip duration is based on the dynamic level of the audio track.

Preferably, the audio data are classified with metadata in order to determine sentences and/or phrases and/or words.

Advantageously, said metadata comprise sound categories as well as priority factors.

Preferably, said time for audio playback start (T3) is adjusted to coincide with a beginning of a selected, classified audio fragment.

Preferably, the method further comprises a step of leaving a visual representation of the played back audio clip on a graphical user interface screen.

Preferably, in case of a reverse video playback, audio is played in forward direction.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

A further object of the present invention is a system for audio/video trick modes comprising an audio/video data receiving block; an audio/video playback block capable of operating according to trick modes under a control of a controller; the system being characterized in that said controller is configured to execute the method according to the present invention.

### BRIEF DESCRIPTION OF THE DRAWINGS

These and other objects of the invention presented herein, are accomplished by providing a system and method for audio/video trick modes. Further details and features of the present invention, its nature and various advantages will become more apparent from the following detailed description of the preferred embodiments shown in drawings, in which:
Fig. 1 presents a diagram of the method according to the present invention;
Fig. 2A shows a graphical representation of video frames and audio clips selected during fast rewind or fast forward where audio clips are of the same length/duration;
Fig. 2B shows a graphical representation of video frames and audio clips selected during fast rewind or fast forward where audio clips are of variable length/duration;
Fig. 2C illustrates a method for removing meaningless information from audio clips to ensure most efficient use of audio information in time domain;
Fig. 3 presents a possible record/playback device according to the present invention.
Fig. 4A-C illustrate a possible visualization of audio and video cues in graphical user interface screen at various FR speeds.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

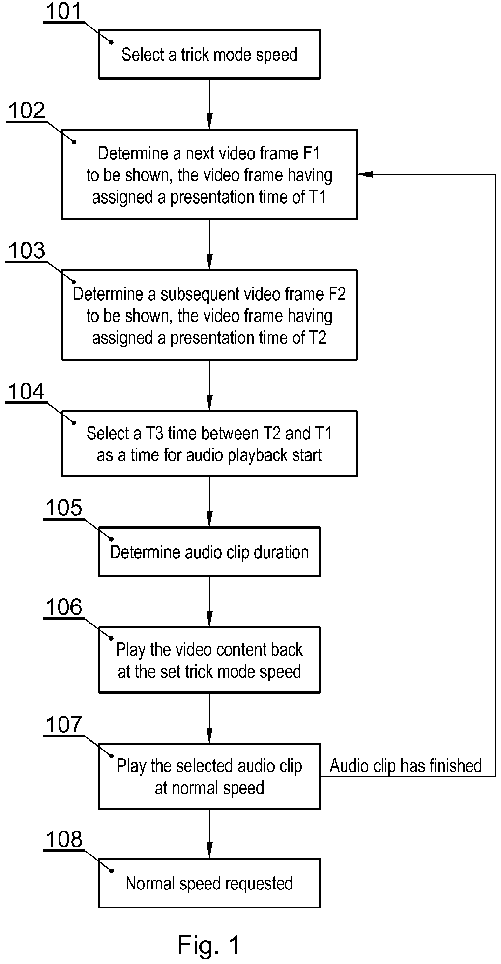

Fig. 1 presents a diagram of the method according to the present invention. At step 101 a trick mode (fast forward or reverse playback) speed is selected, preferably at least 4x.

Subsequently, at step 102, the system determines a next video frame F1 to be shown, the video frame having assigned a presentation time of T1. This naturally depends on current video playback position. Alternatively, the F1 frame may be the currently shown video frame.

Next, at step 103, the system determines a subsequent video frame F2 to be shown after said frame F1. The F2 frame has an assigned presentation time of T2 differing by x from T1. Naturally, in case of fast forward T2 is greater from T1 while in case of a reverse playback T2 is lower than T1.

The F2 frame is chosen, by the playback device, from frames available in the source audio/video data stream based on the currently selected playback speed and frame rate of the data stream. For example, at 25 frames per second and 25x fast forward, the playback device will typically select one frame for presentation out of the set of 25 frames. Sometimes, in trick modes the playback device will not present 25 frames per second, but fewer frames depending on processing power of the device and its ability to decode the source audio/video data stream, especially in reverse playback mode.

When T1 and T2 are known, at step 104 the method selects a T3 time between T2 and T1 (preferably in the middle) as a time for audio clip playback start. In general, subsequent starting points of audio clips are in proximity in time to a then - played video section/frame.

Similarly to video frames, audio frames have assigned presentation time stamps, thus synchronization between audio and video may be achieved at the playback device. In particular, the presentation timestamp (PTS) is a timestamp metadata field in an MPEG transport stream or MPEG program stream that is used to achieve synchronization of programs' separate elementary streams (for example Video, Audio, Subtitles) when presented to the viewer. The PTS is given in units related to a program's overall clock reference, either Program Clock Reference (PCR) or System Clock Reference (SCR), which is also transmitted in the transport stream or program stream. Other audio/video streaming methods may have other similar mechanisms for achieving playback synchronization.

At step 105, audio clip duration is determined. This may be a fixed duration e.g. 1s or a duration selected in dependence to the current trick mode speed, for example the faster the playback speed the shorter the audio clip (4x trick mode speed and 4s audio clip, while 16x trick mode speed and 1s audio clip).

Optionally, a more sophisticated clip selection method may be applied which will select sentences, phrases or single words or even kinds of sounds to be played back in trick modes in the available clip window. For example, at 4x trick mode a sentence may be played back, at 8x trick mode a phrase (several words) may be played back while at 16x trick mode single words may be played back. Thus, the higher the tick mode speed the shorter the audio clip.

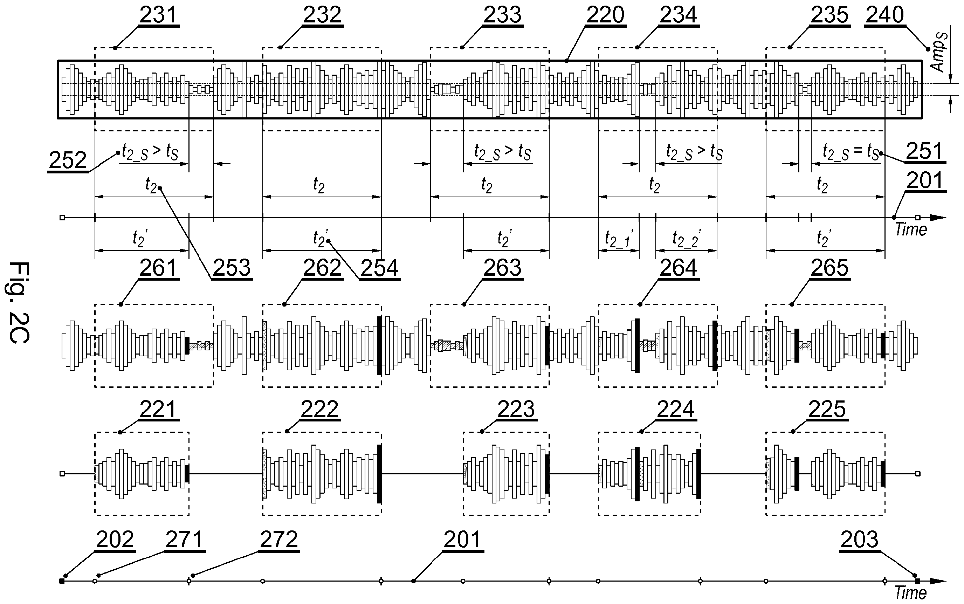

Yet another option for establishing the length/duration of the audio clips to be played back, at fast rewinding or fast forwarding speeds, may be based on the dynamic level of the audio track Fig. 2C 220. If the audio clip 231, 233, 234, contains portions of the audio track that are featured by high dynamic and low dynamic levels indicating respectively meaningful audible content and meaningless silence, and the proportion between the high and low dynamic levels is in favor of mean-ingful audible content, and the meaningless low dynamic level lasts longer than a pre-set time t_{S} Fig. 2C 251, the audio clip will be automatically shortened to the time corresponding to the duration of the meaningful audible content Fig. 2C 221, 223, 224 and the meaningless low dynamic level audio content will be automatically removed from such audio clip.

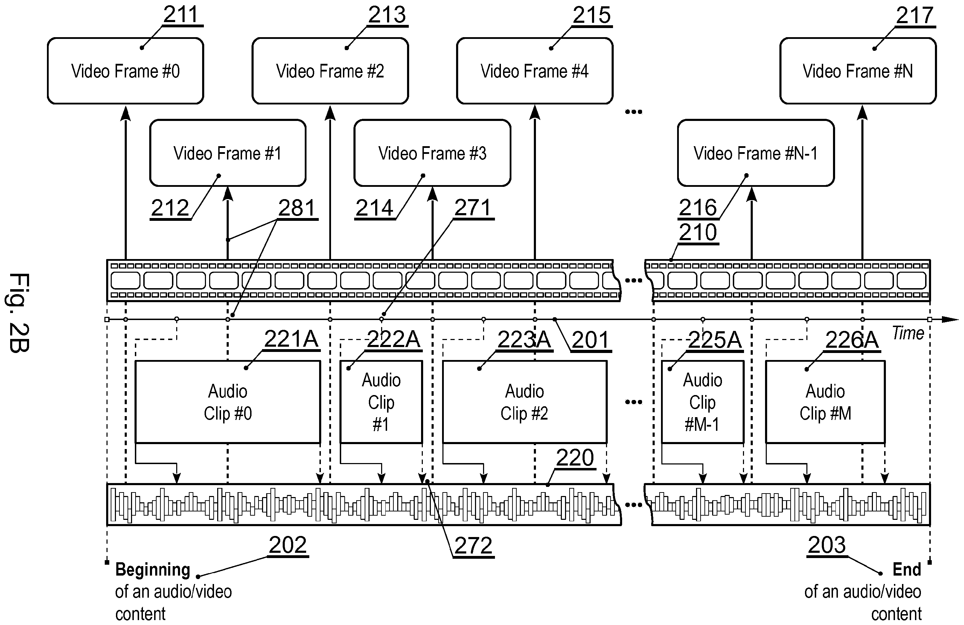

In this way the presented audio clips during the fast rewinding or forwarding process would have changeable duration determined by the dynamic levels of the audio track and at the same time would save time for the presentation of consecutive meaningful audio clips as illustrated in Fig. 2B.

In case the audio clip duration is shortened, the audio clip presentation time T3 may be adjusted accordingly although the audio clip presentation time T3 does not have to be the subject of adjustments as audio clips presented at high speed trick modes are not synchronized with presented video cues anyway. To this end the audio data may be classified with metadata received with the audio data or be locally analyzed prior to playback in order to determine sentences, phrases, words or the like.

Similarly, sound categories (e.g. music, explosion, knock etc.) may be provided in the metadata as well as priority factors (e.g. a first sentence of a dialogue has a higher playback priority, during trick modes, than subsequent sentences of that dialog).

In case said classification is available, T3 of audio may be adjusted to coincide with a beginning of a selected, classified audio segment.

Further, at step 106 the video content is played back at the set speed, for example 16x while the selected audio clip is played back 107 at normal speed i.e. 1x or at least a speed lower than the video playback speed. Optionally, the audio speed may be increased, for example 1.2x, 1.4x, 1.6x, 1.8x, preferably up to 2x.

Thus, in general the audio playback speed is in a range from 1x to 2x while the video playback speed is in a range of 4x to 128x i.e. greater than said audio playback speed. It is to be noted that in case of a reverse video playback, audio will be played in forward direction while keeping the main requirement of having a lower playback speed than video.

When the selected audio clip has been played back, the system returns to step 102 in order to determine a consecutive video frame, its presentation time, and the presentation time of selected consecutive audio clip. Naturally, during audio playback in trick modes the video will be unsynchronized with the audio, both in FF and FR modes, although in reverse playback when video and audio tracks will be played back in opposite directions of timeline, the lack of synchronization of audio and video may seem more natural.

In a slightly different variation of the process, when the selected audio clip has been played back, the system returns to step 102 where it can also determine the next video frame as being the last video frame displayed by the audio/video playback device before the end of the audio clip playback and the subsequent video frame being the first video frame displayed by the audio/video playback device after the end of the audio clip playback. This implementation allows for more efficient insertion of audio cues even though two neighbouring audio clips may contain overlapping content data.

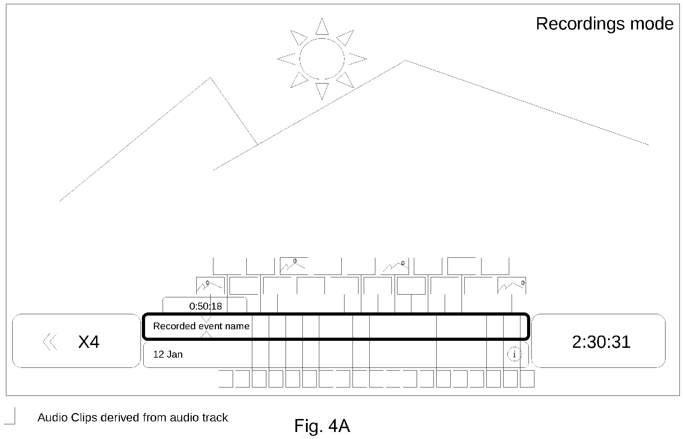

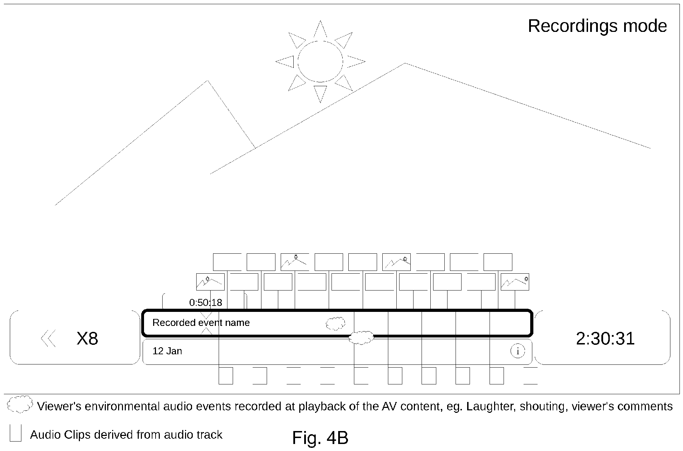

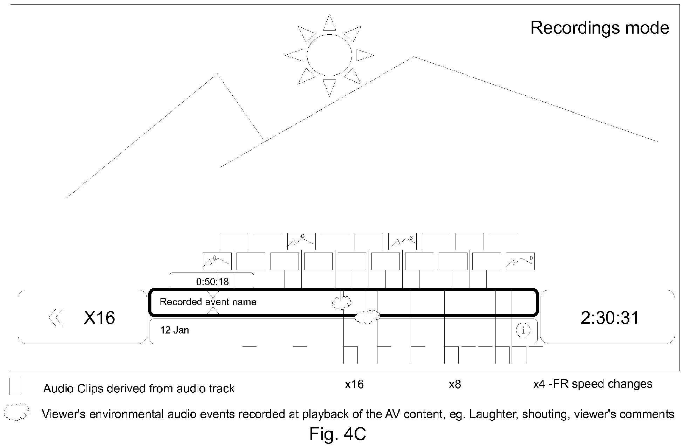

Audio and video playback will be preferably two separate processing threads independent of each other after T3 has been selected. The audio thread may, depending on viewer's/user's preferences, utilize only the original audio track associated with the video content or may also utilize the user's/viewer's environmental audio events that could be recorded by the user while viewing the recorded audio/video content. In the result the presented audio clips may contain either the original audio track or the original audio track merged with user/viewer-related-recorded-at-viewing environmental audio events or just user/viewer-related-recorded-at-view-ing environmental audio events. Fig. 4A-C illustrate examples of many possible visualizations of said threads in graphical user interface screen.

During video and audio playback 106, 107 the system may receive a command 108 requesting a return to normal speed playback. In such case the moment of return to the normal playback may be determined as T3 (i.e. synchronized video and audio playback at speed 1x). Issuing said command 108 may also trigger other options facilitating the process of establishing the synchronized audio/video playback starting point decreasing the need of further rewinding/fast forwarding at lower speeds.

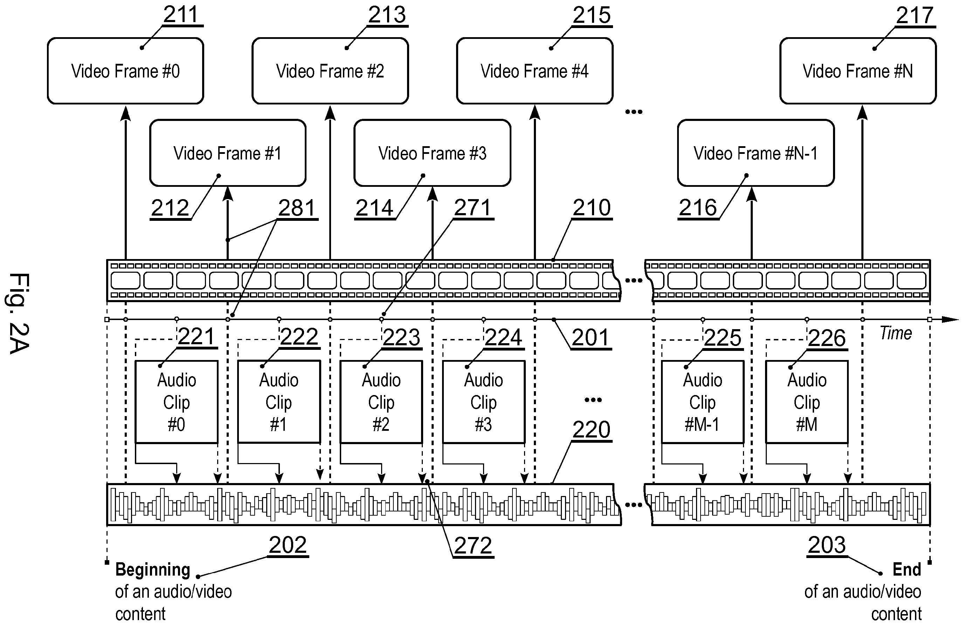

As an option, each time an audio clip is played back in full, the system may leave a visual representation of the played back audio clip on a graphical user interface screen so that later on a viewer/user may navigate through the visual representations of the played back audio clips as well as through the visual representations of the video frames as shown in Fig. 2A 211-217, 221-226 or Fig. 2B 211-217, 221A-226A. As an example a user/viewer may move the cursor over the visual representations of the audio clips to more easily locate a point in time, from which content is to be played back at normal speed in synchronized mode. Hovering over the visual representations of the audio clips displayed at rewinding process may also trigger the audio playback of those audio clips a cursor will be hovering on.

Fig. 2A and 2B show a graphical representation of video frames and audio clips selected during fast forward or fast rewind. Such still frames may also be displayed on a channel banner or graphical user interface corresponding to a given audio/video data stream as shown in Fig. 4A-C.

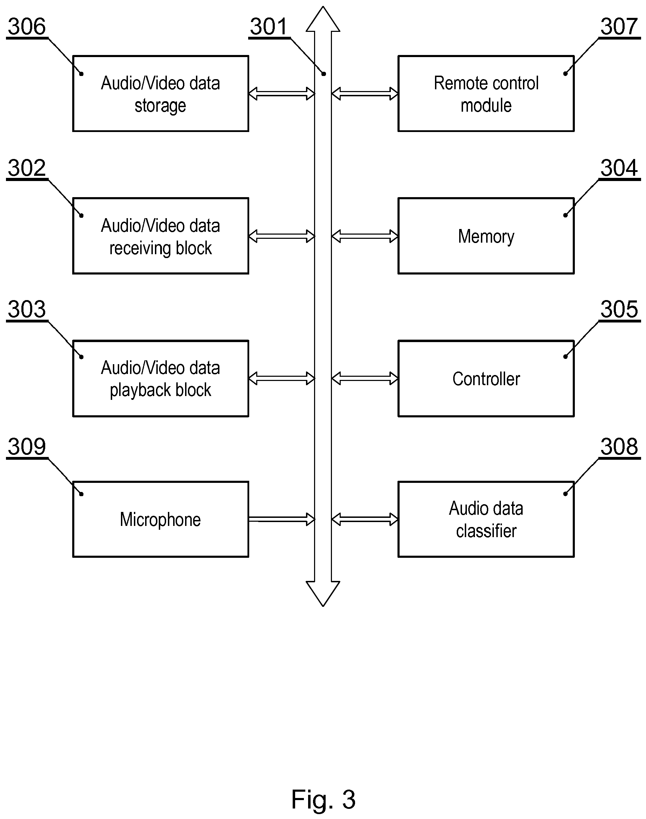

Fig. 3 presents a record/playback device according to the present invention. The system comprises an audio/video data receiving block 302 for receiving and processing audio/video data. It is not relevant what is the transmission scheme or data encoding scheme. It may be IPTV, terrestrial, cable, satellite or the like signal using MPEG2, MPEG or similar encoding techniques.

A received signal may be buffered or stored for a longer time in an audio/video storage 306 and played back by an audio/video playback block 303 capable of operating according to trick modes under a control of a controller 305.

The audio/video storage 306 may also store audio classification metadata as received or output by an audio data classifier module 308. Further, any software required for operation of the system, may be stored in the audio/video storage 306, which may be any kind of non-volatile memory.

The memory 304 will typically store any temporary data required for system operation while the system may be controlled by a remote control unit communicating with a remote control module 307.

Microphone module 309 may additionally generate user's/viewer's various environmental audio events associated with the audio/video content being viewed while being recorded such as laughter, viewer's/user's comments, other audio metadata which could also be part of audio clips presented during FR or FF mode.

Having the described above method and system for the understandable presentation of audio content at higher FR or FF speeds, facilitates the process of establishing the starting point for normal speed playback as scrolling speeds above 32x with only visual cues leave very little time for the user/viewer to decide from which point in time the normal speed playback should begin. In the result a viewer/user goes far beyond desired point in time of the quickly scrolled audio/video content and consequently needs to apply lower FR or FF speeds to locate the desired point in time for normal speed playback, extending in time the process of finding the desired place in audio/video recording/content/stream.

Furnishing understandable audio cues at FR or FF trick modes provide the user/viewer additional identification elements which last longer than the presentation time of video frames used at FR or FF trick modes and give the user/viewer more time to apply necessary commands to begin synchronized normal speed audio/video playback. Additionally, those viewers/users who are visually impaired may use the method and system presented herein for FF or FR relying more on aural stimuli rather than on visual ones which in the case of audio/video content/recording/stream where audio content is of even higher significance than video (e.g. recordings of concerts) is not to be neglected.

4A-C illustrate a possible visualization of audio and video cues in graphical user interface screen at various FR speeds. For example while trick modes, a channel banner is filled with icons representing audio clips derived from audio track and/or viewer's environmental audio events recorded at playback of the audio-video content, eg. laughter, shouting, viewer's comments. At any given moment during trick mode play, the user may select pause command. The icons representing audio clips may now be navigated to using any suitable graphical user interface input means such as a mouse, remote control unit or keyboard. Once navigated to, the selected clip may be played back. When the user has selected a particular icon, a play command returns to normal playback from the position identified by said selected audio clip.

The present invention refers to audio/video playback systems and in particular addresses finding desired playback position while using so called trick modes. Therefore, the invention provides a useful, concrete and tangible result. Due to extensive audio/video data processing as well as presentation, the machine or transformation test is fulfilled and that the idea is not abstract.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for audio/video trick modes may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for audio/video trick modes comprising
• receiving an audio/video data stream;
• receiving a request for a trick mode playback (101) at a given speed greater than 1;
• playing back the video content according to the trick mode speed (106);
the method being **characterized in that** it further comprises the step of:
• playing back sequential audio clips at a speed lower (107) than the trick mode speed;
• wherein subsequent starting points of audio clips are in proximity in time to a then - played video section.

2. The method according to claim 1 wherein the audio playback speed is in a range from 1x to 2x while the video playback speed is in a range of 4x to 128x.

3. The method according to claim 1 wherein said playback comprises the step of:
• determining (102) a next video frame (F1) to be shown, the video frame having assigned a presentation time of (T1);
• determining (103) a subsequent video frame (F2) to be shown after said next video frame (F1) having assigned a presentation time of (T2);
• selecting (104) a (T3) time for audio playback start in proximity in time to a currently played video frame;
• determining (105) an audio clip duration.

4. The method according to claim 1 wherein the determining (105) an audio clip duration assumes a predefined duration.

5. The method according to claim 1 wherein the determining (105) an audio clip is selected in dependence on the current trick mode speed wherein the faster the playback speed the shorter the audio clip.

6. The method according to claim 1 wherein the determining (105) an audio clip duration is based on the dynamic level of the audio track.

7. The method according to claim 5 wherein the audio data are classified with metadata in order to determine sentences and/or phrases and/or words.

8. The method according to claim 7 wherein said metadata comprise sound categories as well as priority factors.

9. The method according to claim 7 wherein said time for audio playback start (T3) is adjusted to coincide with a beginning of a selected, classified audio fragment.

10. The method according to claim 1 wherein the method further comprises a step of leaving a visual representation of the played back audio clip on a graphical user interface screen.

11. The method according to claim 1 wherein in case of a reverse video playback, audio is played in forward direction.

12. A computer program comprising program code means for performing all the steps of the computer-implemented method according to claim 1 when said program is run on a computer.

13. A computer readable medium storing computer-executable instructions performing all the steps of the computer-implemented method according to claim 1 when executed on a computer.

14. A system for audio/video trick modes comprising
• an audio/video data receiving block (302);
• an audio/video playback block (303) capable of operating according to trick modes under a control of a controller (305);
the system being **characterized in that**
• said controller (305) is configured to execute the method according to claim 1.
